# EUROPEAN PATENT APPLICATION

(11) **EP 4 507 058 A1**
(43) Date of publication of application: **12.02.2025**
(21) Application number: 23837545.5
(22) Date of filing: 21.06.2023
(51) Int. Cl.: H01M 10/058, H01M 10/04, B65G 47/52, B65G 47/90

(54) **BATTERY ADHESIVE BONDING DEVICE AND BATTERY ADHESIVE BONDING METHOD**

(71) Applicant: Contemporary Amperex Technology (Hong Kong) Limited, Central, Central And Western District (HK)
(72) Inventor: CAO, Wei, Fujian 352100 (CN); WANG, Youshan, Fujian 352100 (CN); LIAO, Shunlin, Fujian 352100 (CN)
(74) Representative: Rowlands, Stuart Michael
(86) International application number: PCT/CN2023/101787
(87) International publication number: WO 2024/259653

(57) **Abstract**

The present application provides a battery adhesive-applying device and a battery adhesive-applying method. The battery adhesive-applying device includes an adhesive-applying detection mechanism for detecting an adhesive-applying result of a battery; a defective product receiving mechanism for receiving batteries unqualified in adhesive-applying that are detected by the adhesive-applying detection mechanism; a transfer mechanism for transferring the unqualified batteries detected by the adhesive-applying detection mechanism to the defective product receiving mechanism; and a conveying line for conveying the batteries from the adhesive-applying detection mechanism to the transfer mechanism.

## Description

### TECHNICAL FIELD

The present application relates to the field of batteries, and in particular to a battery adhesive-applying device and a battery adhesive-applying method.

### BACKGROUND

In the production process of batteries, there is a need for conducting adhesive-applying treatment on batteries. After the adhesive-applying treatment, there is a need for detecting adhesive-applying results and discharging the unqualified batteries in time. When an operation of discharging the unqualified batteries is performed at an adhesive-applying detection station, it is required to wait for a manipulator to discharge the unqualified batteries, affects the normal operation of the detecting operation and the production cycle.

### SUMMARY OF THE INVENTION

In view of the above issue, an embodiment of the present application provides a battery adhesive-applying device, which can perform the operation of discharging batteries failing to pass the detection, without affecting the normal operation of a previous procedure or occupying the production cycle.

An embodiment of the present application provides a battery adhesive-applying device, including an adhesive-applying detection mechanism for detecting an adhesive-applying result of a battery; a defective product receiving mechanism for receiving batteries unqualified in adhesive-applying that are detected by the adhesive-applying detection mechanism; a transfer mechanism for transferring the unqualified batteries detected by the adhesive-applying detection mechanism to the defective product receiving mechanism; and a conveying line for conveying the batteries from the adhesive-applying detection mechanism to the transfer mechanism.

The adhesive-applying device provided in the embodiment of the present application is arranged such that the transfer mechanism for discharging unqualified batteries is arranged at a station downstream a station where the adhesive-applying detection mechanism is located on the conveying line, allowing a detecting operation of the adhesive-applying detection mechanism and a transfer operation of the transfer mechanism for transferring unqualified batteries to be performed at different stations of the battery conveying line, so the transfer operation for unqualified batteries will not affect the detecting operation of the adhesive-applying detection mechanism and will not affect the production cycle.

In some embodiments, the defective product receiving mechanism includes a discharging line arranged at an angle with respect to the conveying line, unqualified batteries being transferred to the discharging line by the transfer mechanism. With the discharging line arranged at an angle with respect to the conveying line, batteries unqualified in adhesive-applying detection are discharged by the transfer mechanism and the discharging line.

In some embodiments, the conveying line has a preset length between the adhesive-applying detection mechanism and the transfer mechanism, for accommodating batteries that have been detected by the adhesive-applying detection mechanism. The conveying line has the preset length reserved between the adhesive-applying detection mechanism and a defective product discharging mechanism such that in cases where operation time for the transfer mechanism to transfer unqualified batteries is longer than detection time of the adhesive-applying detection mechanism, the batteries that have been detected by an adhesive-applying detection station may be accommodated in the preset length, so the detecting station will not be occupied and the production cycle will not be affected.

In some embodiments, the adhesive-applying detection mechanism is arranged on a first rack of the conveying line, and the transfer mechanism is arranged on a second rack of the conveying line. The first rack and the second rack provide stable support for the adhesive-applying detection mechanism and the transfer mechanism.

In some embodiments, the adhesive-applying detection mechanism includes a first frame arranged across the conveying line; a first longitudinal guide rail arranged on the first frame and parallel to the conveying line; and a vision system arranged on the first longitudinal guide rail and capable of moving along the first longitudinal guide rail, the vision system being used for detecting a battery on the conveying line. This structural arrangement of the adhesive-applying detection mechanism enables the vision system of the adhesive-applying detection mechanism to be stably supported across the conveying line and to move parallel to the conveying line along the longitudinal guide rail.

In some embodiments, the adhesive-applying device includes at least two conveying lines arranged in parallel, and the vision system of the adhesive-applying detection mechanism is correspondingly provided with a vision camera for each conveying line. By providing the vision camera for each conveying line, detection of batteries on each conveying line can be ensured.

In some embodiments, the transfer mechanism includes a battery grabbing member and a second frame, and the battery grabbing member is capable of moving on the second frame in a direction parallel to the conveying line and a direction perpendicular to the conveying line, and is capable of moving in a vertical direction such that the battery grabbing member is allowed to be aligned with batteries unqualified in adhesive-applying on the conveying line and aligned with the defective product receiving mechanism. The arrangement of the second frame of the transfer mechanism enables the battery grabbing member to move in three directions, that is, in a direction parallel to the conveying line, a direction perpendicular to the conveying line, and a vertical direction, so that the battery grabbing member can grab unqualified batteries and transfer the unqualified batteries to the defective product receiving mechanism.

In some embodiments, the second frame includes at least one transverse guide rail arranged across the conveying line; a second longitudinal guide rail extending parallel to the conveying line and capable of moving on the transverse guide rail; and at least one vertical guide rail arranged on the second longitudinal guide rail and capable of moving along the second longitudinal guide rail, where the battery grabbing member is arranged on the vertical guide rail and capable of moving in a vertical direction along the vertical guide rail. The arrangement of the transverse guide rail, longitudinal guide rail and vertical guide rail of the second frame of the transfer mechanism enables the second frame to guide the battery grabbing member to move in a direction parallel to the conveying line, a direction perpendicular to the conveying line, and a vertical direction.

In some embodiments, the second frame includes two transverse guide rails, and two ends of the second longitudinal guide rail are supported on the transverse guide rails, respectively. The arrangement of the two transverse guide rails of the second frame provides stable support for the longitudinal guide rail.

In some embodiments, the battery grabbing member is arranged as a manipulator, and the number of the manipulators included in the transfer mechanism is consistent with the number of batteries of each group of batteries conveyed on the conveying line. The number of the manipulators of the battery grabbing member is set to be consistent with the number of batteries of each set of batteries conveyed on the conveying line, so that a plurality of batteries can be transferred together away from the conveying line.

In some embodiments, the transfer mechanism includes a plurality of manipulators, each manipulator is arranged on one vertical guide rail, and the vertical guide rails are arranged side by side on the second longitudinal guide rail, where at least one vertical guide rail is capable of moving along the second longitudinal guide rail. The vertical guide rails arranged side by side make it possible for the transfer mechanism to be provided with a plurality of manipulators side by side.

An embodiment of the present application provides a battery adhesive-applying method. The battery adhesive-applying method includes detecting an adhesive-applying result of a battery by an adhesive-applying detection mechanism; associating a detection result of being unqualified with identification information of a battery unqualified in adhesive-applying; conveying the battery detected to the transfer mechanism by using the conveying line; identifying the identification information of the battery on the conveying line to determine whether there is a battery unqualified in adhesive-applying; and if yes, transferring the unqualified battery on the conveying line to the defective product receiving mechanism by using the transfer mechanism.

The battery adhesive-applying method provided in this embodiment enables an operation of the transfer mechanism for discharging unqualified batteries to be performed at a station downstream a station where the adhesive-applying detection mechanism is located on the conveying line, allowing a detecting operation of the adhesive-applying detection mechanism and an operation of the transfer mechanism for transferring unqualified batteries to be performed at two different stations of the battery conveying line, so the transfer operation for unqualified batteries will not affect the detecting operation of the adhesive-applying detection mechanism and will not affect the production cycle.

In some embodiments, detecting an adhesive-applying result of a battery by an adhesive-applying detection mechanism includes collecting dimension information of an adhesive-applying strip and dimension information of a battery using the adhesive-applying detection mechanism, and determining whether or not to generate a detection result of being unqualified based on a comparison of the collected dimension information of the adhesive-applying strip with the collected dimension information of the battery. By collecting and comparing the dimension information of the adhesive-applying strip and the dimension information of the battery, it may be determined whether there is an instance of adhesive-applying failure.

In some embodiments, collecting dimension information of an adhesive-applying strip and dimension information of the battery using the adhesive-applying detection mechanism includes collecting an image of a battery carrying the adhesive-applying strip; and determining positions of four edges of the battery and positions of edges of the adhesive-applying strip based on the identification of the image. Determining whether or not to generate a detection result of being unqualified based on a comparison of the collected dimension information of the adhesive-applying strip with the collected dimension information of the battery includes separately calculating a distance from each edge of the adhesive-applying strip to the corresponding edge of the four edges of the battery; and in cases where the distance from any edge of the adhesive-applying strip to the corresponding edge of the battery does not meet a predetermined tolerance range, generating a detection result of being unqualified. By collecting image information of the battery and the adhesive-applying strip and identifying the image information, the positions of the edges of the battery and the adhesive-applying strip can be determined, thereby obtaining dimension information. By calculating the distance from the edge of the adhesive-applying strip to the corresponding edge of the four edges of the battery, whether each distance meets the predetermined tolerance range can be judged, thereby generating a detection result of being unqualified.

In some embodiments, determining positions of four edges of the battery and positions of edges of the adhesive-applying strip based on identification of the image includes acquiring grayscale information of two intersecting edges of the battery in the image, to establish a coordinate system with an intersection point of the acquired two intersecting edges of the battery in the image as an origin; acquiring grayscale information of the four edges of the battery in the image, to determine positions, in the coordinate system, of the four edges of the battery in the image; and acquiring grayscale information of an edge of an outer side of the adhesive-applying strip in the image, to determine a position of the edge, in the coordinate system, of the outer side of the adhesive-applying strip in the image. Through identification of the grayscale information of the image and establishment of the reference coordinate system, the positions of the four edges of the battery and the positions of the edges of the adhesive-applying strip may be accurately determined.

### DESCRIPTION OF DRAWINGS

Various other advantages and benefits will become apparent to those of ordinary skill in the art upon reading the following detailed description of the preferred embodiments. The drawings are for the purpose of illustrating the preferred embodiments only and are not to be considered a limitation to the present application. Furthermore, in all the drawings, the same reference numerals represent the same components. In the drawings:
Fig.1 is a three-dimensional structural schematic of a battery adhesive-applying device according to an embodiment of the present application;
Fig.2 is a schematic diagram of the three-dimensional structure of an adhesive tearing grabber and an adhesive-applying detection apparatus of a battery adhesive-applying device according to an embodiment of the present application;
Fig. 3 is an enlarged view of the adhesive-applying detection apparatus shown in Fig. 2 according to an embodiment of the present application; and
Fig. 4 is a schematic diagram of the three-dimensional structure of a transfer mechanism and a defective product receiving mechanism of a battery adhesive-applying device according to an embodiment of the present application.

In the drawings, the drawings are not drawn to actual scale.

Description of numerals: 1, adhesive-applying detection mechanism; 2, transfer mechanism; 3, conveying line; 4, adhesive tearing grabber; 5, defective product receiving mechanism; 6, first rack; 7, second rack; 8, preset length; 9, first frame, 10, first longitudinal guide rail; 11, vision system; 12, vision camera; 13, battery grabbing member; 14, second frame; 15, transverse guide rail; 16, second longitudinal guide rail; 17, vertical guide rail; 18, manipulator; 19, carrier; and 20, battery.

### DETAILED DESCRIPTION

Embodiments of the technical solutions of the present application will be described in detail below in conjunction with the drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the Specification and the Claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the Specification does not necessarily refer to the same embodiment, nor is it a separate or alternative embodiment that is mutually exclusive with other embodiments. It is explicitly and implicitly understood by those skilled in the art that the embodiment described herein may be combined with other embodiments.

In the description of the embodiments of the present application, the orientation or position relationship indicated by the technical terms "center", "longitudinal", "transverse", "length", "width", "thickness", "upper", "lower", "front", "back", "left", "right", "vertical", "horizontal", "perpendicular", "parallel", "top", "bottom", "inner", "outer", "clockwise", "counterclockwise", "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

In the related art, a conveying line moves a battery finished for adhesive-applying from an adhesive-applying station to an adhesive-applying detection station, whether battery adhesive-applying is qualified is detected, and it is required to discharge the battery in time if the battery being unqualified in adhesive-applying is detected, to avoid the battery with poor adhesive-applying being mixed into qualified batteries.

In performing a discharging operation for unqualified batteries, there are at least the following problem: when the battery's adhesive-applying result detection is completed at the adhesive-applying station and the discharging operation for unqualified batteries is performed, it is required to wait for a manipulator to discharge the unqualified batteries, which causes the adhesive-applying detection station failing to detect the battery normally, and occupies the production cycle.

In order to solve the problem that the discharging operation for unqualified batteries occupies the production cycle, an operation of an adhesive-applying detection mechanism and the discharging operation for the unqualified batteries may be set at different stations of the conveying line, thus solving the problem that the discharging operation for the unqualified batteries occupies the production cycle.

A battery to which adhesive is applied by a battery adhesive-applying device disclosed in an embodiment of the present application may be used, but is not limited to, in electrical apparatuses such as a vehicle, a ship, or an aircraft. The electrical apparatuses may be, but are not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric car toys, electric ship toys, electric airplane toys, and the like. The spacecraft may include airplanes, rockets, space shuttles, spaceships, and the like.

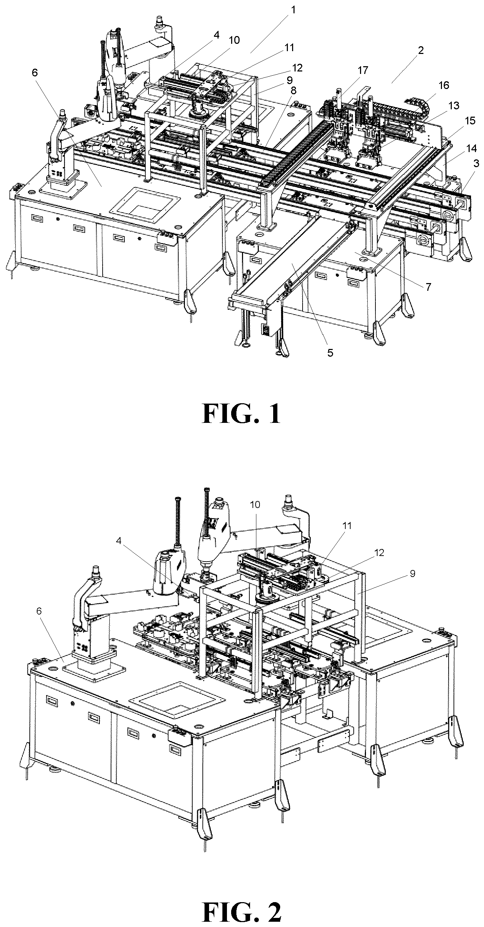

The technical solutions provided in the present application will be described in more detail below with reference to Fig. 1 to Fig. 4.

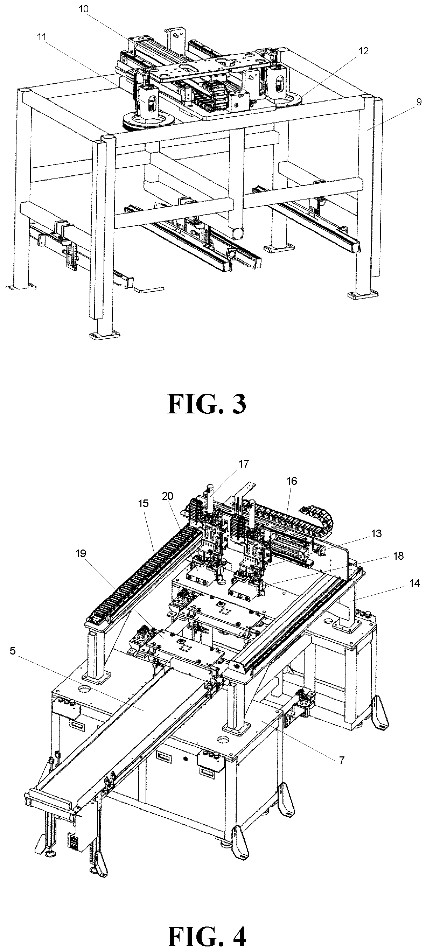

Referring to Fig. 1 to Fig. 4, Fig. 1 is a three-dimensional structural schematic of a battery adhesive-applying device according to an embodiment of the present application; Fig. 2 is a schematic diagram of the three-dimensional structure of an adhesive tearing grabber and an adhesive-applying detection apparatus of a battery adhesive-applying device according to an embodiment of the present application; Fig. 3 is an enlarged view of the adhesive-applying detection apparatus shown in Fig. 2 according to an embodiment of the present application; and Fig. 4 is a schematic diagram of the three-dimensional structure of a transfer mechanism and a defective product receiving mechanism of a battery adhesive-applying device according to an embodiment of the present application.

As shown in Fig. 1 to Fig. 4, a battery adhesive-applying device is provided, and the battery adhesive-applying device may include an adhesive-applying detection mechanism 1 for detecting an adhesive-applying result of a battery 20. The battery adhesive-applying device may include a defective product receiving mechanism 5 for receiving a battery 20 unqualified in adhesive-applying that is detected by the adhesive-applying detection mechanism 1. The battery adhesive-applying device may include a transfer mechanism 2 for transferring, to the defective product receiving mechanism 5, the battery 20 unqualified that is detected by the adhesive-applying detection mechanism 1. The battery adhesive-applying device may include a conveying line 3 for conveying the battery 20 from the adhesive-applying detection mechanism 1 to the transfer mechanism 2.

As shown in Figs. 1 and 4, the conveying line 3 conveys the battery 20 shown in Fig. 4 (the battery 20 is not shown on the conveying line 3 in Fig. 1) to different stations. Stations involved in the battery adhesive-applying device in the embodiments of the present application may include an adhesive tearing station, an adhesive-applying detection station, and a defective product discharging station. A defective product refers to a battery 20 unqualified in adhesive-applying detection. The battery 20 conveyed by the conveying line 3 may be a battery cell, or a battery module composed of battery cells. In the production process of the battery 20, the battery 20 needs to be subj ect to an adhesive-applying operation, to fix the battery 20 and a battery housing via an adhesive strip or to improve strength of a battery surface or prevent the battery surface from being pierced.

As shown in Figs. 1 to 4, at the adhesive tearing station, an adhesive tearing grabber 4 tears off release paper on a surface of the battery 20, and the battery 20 is conveyed under the adhesive-applying detection mechanism 1 of the adhesive-applying detection station by the conveying line 3. At the adhesive-applying detection station, the adhesive-applying detection mechanism 1 detects an adhesive-applying result through visual detection, and screens out batteries 20 with poor adhesive-applying. The batteries 20 that have been detected by the adhesive-applying detection mechanism 1 are conveyed to the defective product discharging station by the conveying line 3. At the defective product discharging station, the transfer mechanism 2 allows the batteries 20 unqualified in detection to leave the conveying line 3 and transfers them to the defective product receiving mechanism 5, while the batteries 20 qualified in detection will continually be conveyed on the conveying line 3 to downstream apparatus.

The battery adhesive-applying device provided in this embodiment enables a detecting operation of the adhesive-applying detection mechanism 1 and a transfer operation of the transfer mechanism 2 for transferring unqualified batteries 20 to be performed at different stations of the battery 20 conveying line 3. Since there is independence of the adhesive-applying detection station for performing the detecting operation of the adhesive-applying detection mechanism 1 and the defective product discharging station for the transfer mechanism 2 to discharge unqualified batteries 20 from the conveying line 3 is separately provided, the transfer operation for the unqualified batteries 20 will not affect the detecting operation of the adhesive-applying detection mechanism 1, so that a battery discharging operation will not affect the production cycle.

In some embodiments, the defective product receiving mechanism 5 may include a discharging line arranged at an angle with respect to the conveying line 3, unqualified batteries 20 being transferred to the discharging line by the transfer mechanism 2.

The discharging line of the defective product receiving structure may be arranged to intersect with the conveying line 3, e.g., the discharging line may be arranged transverse to the conveying line 3 to be perpendicular to each other. The discharging line may be arranged in the form of a belt line or a speed chain etc. as required.

With the discharging line arranged at an angle with respect to the conveying line 3, batteries 20 unqualified in adhesive-applying detection may be quickly discharged out of the conveying line 3 to avoid being mixed into qualified batteries 20 conveyed on the conveying line 3.

In some embodiments, the conveying line 3 has a preset length 8 between the adhesive-applying detection mechanism 1 and the transfer mechanism 2, for accommodating batteries 20 that have been detected by the adhesive-applying detection mechanism 1.

The conveying line 3 has the preset length 8 reserved between the adhesive-applying detection mechanism 1 and the transfer mechanism 2. The preset length 8 may be determined based on the factors, such as time required for the adhesive-applying detection mechanism 1 to detect a battery adhesive-applying result and time required for the transfer mechanism 2 to transfer unqualified batteries 20.

With the preset length, in cases where operation time for the transfer mechanism 2 to transfer unqualified batteries 20 is longer than detection time of the adhesive-applying detection mechanism 1, the batteries 20 that have been detected by the adhesive-applying detection mechanism 1 may be accommodated in the preset length 8, so the detecting station will not be occupied by the batteries 20 that have been detected and the production cycle will not be affected.

In some embodiments, the adhesive-applying detection mechanism 1 is arranged on a first rack 6 of the conveying line 3, and the transfer mechanism 2 is arranged on a second rack 7 of the conveying line 3.

At the adhesive-applying detection station and defective product discharging station of the conveying line 3, the conveying line 3 is supported separately by the first rack and the second rack, the adhesive-applying detection mechanism 1 is arranged on the first rack 6 of the conveying line 3, and the transfer mechanism 2 is arranged on the second rack 7 of the conveying line 3.

The first rack 6 and the second rack 7 provide stable support for the adhesive-applying detection mechanism 1 and the transfer mechanism 2.

In some embodiments, the adhesive-applying detection mechanism 1 man include a first frame 9 arranged across the conveying line 3; a first longitudinal guide rail 10 arranged on the first frame 9 and parallel to the conveying line 3; and a vision system 11 arranged on the first longitudinal guide rail 10 and capable of moving along the first longitudinal guide rail 10, the vision system 11 being used for detecting a battery 20 on the conveying line 3.

The first frame 9 of the adhesive-applying detection mechanism 1 is arranged across the conveying line 3, and the first longitudinal guide rail 10 of the adhesive-applying detection mechanism 1 is supported on the first frame 9. The first longitudinal guide rail 10 is arranged parallel to the conveying line 3, and the vision system 11 for detecting the battery 20 on the conveying line 3 is arranged on the first longitudinal guide rail 10 and capable of moving along the first longitudinal guide rail 10. The first longitudinal guide rail 10 may, for example, be arranged in the form of a linear module.

The above-mentioned structural arrangement of the adhesive-applying detection mechanism 1 enables the vision system 11 of the adhesive-applying detection mechanism 1 to be stably supported across the conveying line 3 and to move parallel to the conveying line 3 along the longitudinal guide rail.

In some embodiments, the adhesive-applying device may include at least two conveying lines 3 arranged in parallel, and the vision system 11 of the adhesive-applying detection mechanism 1 is correspondingly provided with a vision camera 12 for each conveying line 3.

One or two or more conveying lines 3 of the battery adhesive-applying device may be provided. In the case where the battery adhesive-applying device is provided with two or more conveying lines 3 arranged in parallel, the vision system 11 of the adhesive-applying detection mechanism 1 may be provided with two or more vision cameras 12 correspondingly for photographing batteries 20 on each conveying line 3.

By providing the vision camera 12 for each conveying line 3, detection of the batteries 20 on each conveying line 3 can be ensured.

In some embodiments, the transfer mechanism 2 may include a battery grabbing member 13 and a second frame 14, and the battery grabbing member 13 is capable of moving on the second frame 14 in a direction parallel to the conveying line 3 and a direction perpendicular to the conveying line 3, and is capable of moving in a vertical direction such that the battery grabbing member 13 is allowed to be aligned with batteries 20 unqualified in adhesive-applying on the conveying line 3 and aligned with the defective product receiving mechanism 5.

The second frame 14 of the transfer mechanism 2 may be configured in triaxial truss structure, for supporting the battery grabbing member 13 and enabling the battery grabbing member 13 to move in three directions, that is, in a direction parallel to the conveying line 3, a direction perpendicular to the conveying line 3, and a vertical direction, so that the battery grabbing member 13 can grab unqualified batteries 20 and transfer the unqualified batteries 20 to the defective product receiving mechanism 5.

In some embodiments, the second frame 14 may include at least one transverse guide rail 15 arranged across the conveying line 3; a second longitudinal guide rail 16 extending parallel to the conveying line 3 and capable of moving on the transverse guide rail 15; and at least one vertical guide rail 17 arranged on the second longitudinal guide rail 16 and capable of moving along the second longitudinal guide rail 16, where the battery grabbing member 13 is arranged on the vertical guide rail and capable of moving in a vertical direction along the vertical guide rail.

The transverse guide rail 15 of the second frame 14 of the transfer mechanism 2 is arranged across the conveying line 3, and there may be one or more transverse guide rails 15 provided. In Fig. 4 of this embodiment, there are two transverse guide rails 15 provided. Those skilled in the art may arrange the transverse guide rail 15, the second longitudinal guide rail 16, and the vertical guide rail 17 in different forms as required, such as slide rails, linear modules, or lead screws.

The arrangement of the transverse guide rail 15, longitudinal guide rail 16 and vertical guide rail 17 enables the second frame 14 to guide the battery grabbing member 13 to move in a direction parallel to the conveying line 3, a direction perpendicular to the conveying line 3, and a vertical direction.

In some embodiments, the second frame 14 may include two transverse guide rails 15, and two ends of the second longitudinal guide rail 16 are supported on the transverse guide rails 15, respectively.

There are two transverse guide rails 15 of the second frame 14 provided, providing stable support for the second longitudinal guide rail 16.

In some embodiments, the battery grabbing member 13 is arranged as a manipulator 18, and the number of the manipulators 18 included in the transfer mechanism 2 is consistent with the number of batteries 20 of each set of batteries conveyed on the conveying line 3.

According to an embodiment of the present invention, a carrier 19 for a battery 20 is arranged on the conveying line 3, and the battery 20 is arranged in the carrier 19. The carrier 19 for the battery 20 is, for example, a tray. In cases where a group of batteries carried in the carrier 19 are batteries 20 under good performance matching, if it is determined that one battery 20 on the carrier 19 is an unqualified battery 20, then other batteries 20 with matching performances on the carrier 19 also need to be discharged. Therefore, the number of the manipulators 18 of the transfer mechanism 2 needs to remain consistent with the number of the batteries 20 on the carrier 19, so that in cases where one battery 20 on the carrier 19 is unqualified, all the batteries 20 on the carrier 19 will be discharged together.

In some embodiments, the transfer mechanism 2 may include a plurality of manipulators 18, each manipulator 18 is arranged on one vertical guide rail 17, and the vertical guide rails 17 are arranged side by side on the second longitudinal guide rail 16, where at least one vertical guide rail 17 is capable of moving along the second longitudinal guide rail.

For example, the number of manipulators 18 may be set to two, and two vertical guide rails 17 arranged side by side on the second longitudinal guide rail 16 may be arranged correspondingly, where one vertical guide rail 17 may be configured to move along the second longitudinal guide rail 16, and the other vertical guide rail 17 may be configured not to move along the second longitudinal guide rail 16.

In the case where the transfer mechanism 2 is provided with a plurality of manipulators 18, the vertical guide rails 17 that guide movement of the manipulators 18 may be arranged side by side on the second longitudinal guide rail 16 to facilitate discharging multiple batteries 20 together, reducing possibilities of mutual interference.

According to an embodiment of the present application, referring to Figs. 1 to 4, the embodiment of the present application provides a battery adhesive-applying device. The battery adhesive-applying device may include an adhesive-applying detection mechanism 1 for detecting an adhesive-applying result of a battery 20 accommodated in a carrier 19; a defective product receiving mechanism 5 for receiving unqualified batteries 20 that are detected by the adhesive-applying detection mechanism 1; a transfer mechanism 2 for transferring the unqualified batteries 20 detected by the adhesive-applying detection mechanism 1 to the defective product receiving mechanism 5; and a conveying line 3 for conveying the carrier 19 carrying batteries 20 from the adhesive-applying detection mechanism 1 to the transfer mechanism 2. Two batteries 20 with matching performances may be accommodated in the carrier 19, and the transfer mechanism 2 may be provided with two battery grabbing members 13. In cases where the adhesive-applying detection mechanism 1 detects that one battery 20 in the carrier 19 is unqualified, both batteries 20 in the carrier 19 are allowed to leave the conveying line 3 and discharged to the defective product receiving mechanism 5 using the two battery grabbing members 13.

An embodiment of the present application provides a battery adhesive-applying method. The battery adhesive-applying method may include detecting an adhesive-applying result of a battery 20 by an adhesive-applying detection mechanism 1; associating a detection result of being unqualified with identification information of a battery 20 unqualified in adhesive-applying; conveying the battery 20 detected to the transfer mechanism 2 with the conveying line 3; identifying the identification information of the battery 20 on the conveying line 3 to determine whether there is a battery 20 unqualified in adhesive-applying; and if yes, transferring the unqualified battery 20 on the conveying line 3 to the defective product receiving mechanism 5 by using the transfer mechanism 2.

Various electrical components such as the adhesive-applying detection mechanism 1, the conveying line 3, and the transfer mechanism 2 are separately and communicatively connected to a control system of a production line, such as a PLC. At an adhesive-applying detection station, the adhesive-applying detection mechanism 1 uploads a photographing result to the PLC, the PLC judges whether adhesive-applying for a battery 20 is qualified by comparing dimension information of the battery 20 photographed with dimension information of an adhesive-applying strip, and the PLC binds a comparison result in a data form to the identification information of the battery 20. At a defective product discharging station, the PLC determines whether or not to execute a discharging action for the unqualified battery 20 by reading the identification information of the battery 20.

In the case where the battery 20 is arranged in a carrier 19, the identification information of the battery 20 may be bound to identification information of the carrier 19, such as an RFID of the carrier 19.

The battery adhesive-applying method provided in this embodiment enables an operation of the transfer mechanism 2 for discharging unqualified batteries 20 to be performed at a station downstream a station where the adhesive-applying detection mechanism 1 is located on the conveying line 3, allowing a detecting operation of the adhesive-applying detection mechanism 1 and an operation of the transfer mechanism 2 for transferring unqualified batteries 20 to be performed at two different stations of the battery conveying line 3, so a transfer operation for the unqualified batteries 20 will not affect the detecting operation of the adhesive-applying detection mechanism 1 and will not affect the production cycle.

In some embodiments, detecting an adhesive-applying result of a battery 20 by the adhesive-applying detection mechanism 1 may include collecting dimension information of an adhesive-applying strip and dimension information of a battery 20 using the adhesive-applying detection mechanism 1, and determining whether or not to generate a detection result of being unqualified based on a comparison of the collected dimension information of the adhesive-applying strip with the collected dimension information of the battery 20.

The adhesive-applying detection mechanism 1 collects the dimension information of the adhesive-applying strip and the dimension information of the battery 20, and a PLC of a production line compares the collected dimension information of the adhesive-applying strip with the collected dimension information of the battery 20 to determine whether or not to generate the detection result of being unqualified.

By collecting and comparing the dimension information of the adhesive-applying tape and the dimension information of the battery 20, basic information for generating the detection result is determined.

In some embodiments, collecting the dimension information of the adhesive-applying strip and the dimension information of the battery 20 using the adhesive-applying detection mechanism 1 may include collecting an image of a battery 20 carrying the adhesive-applying strip; and determining positions of four edges of the battery 20 and positions of edges of the adhesive-applying strip based on identification of the image. Determining whether or not to generate a detection result of being unqualified based on a comparison of the collected dimension information of the adhesive-applying strip with the collected dimension information of the battery 20 may include separately calculating a distance from each edge of the adhesive-applying strip to the corresponding edge of the four edges of the battery 20; and in cases where the distance from any edge of the adhesive-applying strip to the corresponding edge of the battery 20 does not meet a predetermined tolerance range, generating a detection result of being unqualified.

The adhesive-applying detection mechanism 15 collects image information of the battery 20 and the adhesive strip, and the PLC determines the positions of the edges of the battery 20 and the adhesive strip according to the image information, thereby obtaining dimension information. By calculating the distance from the edge of the adhesive-applying strip to the corresponding edge of the four edges of the battery 20, the PLC may judge whether each distance meets the predetermined tolerance range. If each distance meets the predetermined tolerance range, a detection result for qualification is generated. If one of the distances does not meet the predetermined tolerance range, a detection result of being unqualified is generated.

Precision of the detection result is ensured by a precise distance comparison between the battery 20 and the adhesive strip.

In some embodiments, determining positions of four edges of the battery 20 and positions of edges of the adhesive-applying strip based on the identification of the image may include acquiring grayscale information of two intersecting edges of the battery 20 in the image, to establish a coordinate system with an intersection point of the acquired two intersecting edges of the battery 20 in the image as an origin; acquiring grayscale information of the four edges of the battery 20 in the image, to determine positions, in the coordinate system, of the four edges of the battery 20; and acquiring grayscale information of an edge of an outer side of the adhesive-applying strip in the image, to determine a position of the edge, in the coordinate system, of the outer side of the adhesive-applying strip.

Through identification of the grayscale information of the image and establishment of the coordinate system, the positions of the four edges of the battery 20 and the positions of the edges of the adhesive-applying strip in the image may be quickly determined.

According to an embodiment of the present application, provided is a battery adhesive-applying method. The battery adhesive-applying method may include detecting an adhesive-applying result of a battery 20 by an adhesive-applying detection mechanism 1; associating a detection result of being unqualified with identification information of a tray 19 carrying a battery 20 unqualified in adhesive-applying; conveying the tray 19 carrying the battery 20 detected to the transfer mechanism 2 with the conveying line 3; identifying the identification information of the tray 19 carrying the battery 20 on the conveying line 3 to determine whether there is the tray 19 carrying the battery 20 unqualified in adhesive-applying; and if yes, transferring all batteries on the tray 19 that carries the battery 20 unqualified in adhesive-applying and that is on the conveying line 3, to the defective product receiving mechanism 5 by using the transfer mechanism 2.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A battery adhesive-applying device, comprising:
an adhesive-applying detection mechanism for detecting an adhesive-applying result of a battery;
a defective product receiving mechanism for receiving a battery unqualified in adhesive-applying that is detected by the adhesive-applying detection mechanism;
a transfer mechanism for transferring, to the defective product receiving mechanism, the battery unqualified that is detected by the adhesive-applying detection mechanism; and
a conveying line for conveying the battery from the adhesive-applying detection mechanism to the transfer mechanism.

2. The battery adhesive-applying device according to claim 1, wherein
the defective product receiving mechanism comprises a discharging line arranged at an angle with respect to the conveying line, and the battery unqualified is transferred to the discharging line by the transfer mechanism.

3. The battery adhesive-applying device according to claim 1 or 2, wherein
the conveying line has a preset length between the adhesive-applying detection mechanism and the transfer mechanism, for accommodating a battery that has been detected by the adhesive-applying detection mechanism.

4. The battery adhesive-applying device according to any one of claims 1-3, wherein
the adhesive-applying detection mechanism is arranged on a first rack of the conveying line, and the transfer mechanism is arranged on a second rack of the conveying line.

5. The battery adhesive-applying device according to any one of claims 1-4, wherein
the adhesive-applying detection mechanism comprises:
a first frame arranged across the conveying line;
a first longitudinal guide rail arranged on the first frame and parallel to the conveying line; and
a vision system arranged on the first longitudinal guide rail and capable of moving along the first longitudinal guide rail, the vision system being used for detecting a battery on the conveying line.

6. The battery adhesive-applying device according to claim 5, wherein
the adhesive-applying device comprises at least two conveying lines arranged in parallel, and the vision system of the adhesive-applying detection mechanism is correspondingly provided with a vision camera for each conveying line.

7. The battery adhesive-applying device according to any one of claims 1-6, wherein
the transfer mechanism comprises a battery grabbing member and a second frame, and the battery grabbing member is capable of moving on the second frame in a direction parallel to the conveying line and a direction perpendicular to the conveying line, and is capable of moving in a vertical direction such that the battery grabbing member is allowed to be aligned with a battery unqualified in adhesive-applying on the conveying line and aligned with the defective product receiving mechanism.

8. The battery adhesive-applying device according to claim 7, wherein
the second frame comprises:
at least one transverse guide rail arranged across the conveying line;
a second longitudinal guide rail extending parallel to the conveying line and capable of moving on the transverse guide rail; and
at least one vertical guide rail arranged on the second longitudinal guide rail and capable of moving along the second longitudinal guide rail,
wherein the battery grabbing member is arranged on the vertical guide rail, and is capable of moving in the vertical direction along the vertical guide rail.

9. The battery adhesive-applying device according to claim 8, wherein
the second frame comprises two transverse guide rails, and two ends of the second longitudinal guide rail are supported on the transverse guide rails, respectively.

10. The battery adhesive-applying device according to claim 8 or 9, wherein
the battery grabbing member is arranged as a manipulator, and the number of the manipulators comprised by the transfer mechanism is consistent with the number of batteries of each set of batteries conveyed on the conveying line.

11. The battery adhesive-applying device according to claim 10, wherein
the transfer mechanism comprises a plurality of manipulators, each manipulator is arranged on one vertical guide rail, and the vertical guide rails are arranged side by side on the second longitudinal guide rail, wherein at least one vertical guide rail is capable of moving along the second longitudinal guide rail.

12. A battery adhesive-applying method, wherein the battery adhesive-applying method comprises:
detecting an adhesive-applying result of a battery by an adhesive-applying detection mechanism;
associating a detection result of being unqualified with identification information of a battery unqualified in adhesive-applying;
conveying the battery detected to a transfer mechanism by using a conveying line;
identifying the identification information of the battery on the conveying line to determine whether there is a battery unqualified in adhesive-applying; and
if yes, transferring the battery unqualified on the conveying line to a defective product receiving mechanism by using the transfer mechanism.

13. The battery adhesive-applying method according to claim 12, wherein
detecting an adhesive-applying result of a battery by an adhesive-applying detection mechanism comprises:
collecting dimension information of an adhesive-applying strip and dimension information of the battery using the adhesive-applying detection mechanism, and
determining whether or not to generate a detection result of being unqualified based on a comparison of the collected dimension information of the adhesive-applying strip with the collected dimension information of the battery.

14. The battery adhesive-applying method according to claim 13, wherein
collecting dimension information of an adhesive-applying strip and dimension information of the battery using the adhesive-applying detection mechanism comprises:
collecting an image of a battery carrying an adhesive-applying strip; and
determining positions of four edges of the battery and positions of edges of the adhesive-applying strip based on identification of the image;
determining whether or not to generate a detection result of being unqualified based on a comparison of the collected dimension information of the adhesive-applying strip with the collected dimension information of the battery comprises:
calculating, separately, a distance from each edge of the adhesive-applying strip to a corresponding edge of the four edges of the battery; and
in cases where the distance from any edge of the adhesive-applying strip to the corresponding edge of the battery does not meet a predetermined tolerance range, generating the detection result of being unqualified.

15. The battery adhesive-applying method according to claim 14, wherein
determining positions of four edges of the battery and positions of edges of the adhesive-applying strip based on identification of the image comprises:
acquiring grayscale information of two intersecting edges of the battery in the image, to establish a coordinate system with an intersection point of the acquired two intersecting edges of the battery as an origin;
acquiring grayscale information of the four edges of the battery in the image, to determine the positions, in the coordinate system, of the four edges of the battery; and
acquiring grayscale information of an edge of the outer side of the adhesive-applying strip in the image, to determine the position, in the coordinate system, the edge of the outer side of the adhesive-applying strip.
